# EUROPÄISCHE PATENTSCHRIFT

(11) **EP 3 124 304 B1**
(45) Veröffentlichungstag und Bekanntmachung des Hinweises auf die Patenterteilung: **17.07.2019**
(21) Anmeldenummer: 16001012.0
(22) Anmeldetag: 04.05.2016
(51) Int. Cl.: B60K 6/48, B60W 20/00, B60W 20/30, B60W 20/15, B60W 30/184, B60W 10/11, B60W 10/10, B60W 10/06, B60W 10/08

(54) **VERFAHREN ZUM BETREIBEN EINER HYBRIDANTRIEBSEINRICHTUNG FÜR EIN KRAFTFAHRZEUG SOWIE ENTSPRECHENDE HYBRIDANTRIEBSEINRICHTUNG**
METHOD FOR OPERATING A HYBRID DRIVE DEVICE FOR A MOTOR VEHICLE AND CORRESPONDING HYBRID DRIVE DEVICE
PROCÉDÉ DE FONCTIONNEMENT D'UN DISPOSITIF D'ENTRAÎNEMENT HYBRIDE POUR VÉHICULE AUTOMOBILE ET DISPOSITIF D'ENTRAÎNEMENT HYBRIDE CORRESPONDANT

(30) Priorität: 29.07.2015 DE 102015009901
(43) Veröffentlichungstag der Anmeldung: 01.02.2017
(73) Patentinhaber: AUDI AG, 85045 Ingolstadt (DE)
(72) Erfinder: Petz, Andreas, DE - 85049 Ingolstadt (DE)

(56) Entgegenhaltungen:
- DE-A1-102013 007 354
- JP-A- 2005 263 061
- US-A1- 2011 232 980

## Beschreibung

Die Erfindung betrifft ein Verfahren zum Betreiben einer Hybridantriebseinrichtung für ein Kraftfahrzeug, wobei die Hybridantriebseinrichtung über ein Antriebsaggregat sowie eine elektrische Maschine verfügt, die während eines Fahrbetriebs des Kraftfahrzeugs über ein Schaltgetriebe mit einer Abtriebswelle der Hybridantriebseinrichtung wirkverbunden sind, wobei bei einem Überschreiten eines ersten Temperaturgrenzwerts durch eine Temperatur der elektrischen Maschine mittels des Schaltgetriebes die Übersetzung zwischen der elektrischen Maschine und der Abtriebswelle verkleinert wird. Die Erfindung betrifft weiterhin eine Hybridantriebseinrichtung.

Die Hybridantriebseinrichtung dient zum Antreiben des Kraftfahrzeugs, mithin also dem Bereitstellen eines auf das Antreiben des Kraftfahrzeugs gerichteten Drehmoments. Die Hybridantriebseinrichtung verfügt dabei über mehrere Antriebsaggregate, insbesondere mehrere Antriebsaggregate von unterschiedlichem Typ. Das vorstehend benannte Antriebsaggregat bildet dabei beispielsweise ein erstes der Antriebsaggregate. Besonders bevorzugt ist es als Brennkraftmaschine ausgebildet. Ein weiteres der Antriebsaggregate liegt in Form der elektrischen Maschine vor.

Die Hybridantriebseinrichtung ist dazu ausgebildet, zumindest zeitweise ein von mehreren Antriebsaggregaten bereitgestelltes Drehmoment zur Verfügung zu stellen. So kann beispielsweise das Antriebsmoment nur mittels des Antriebsaggregats oder nur mittels der elektrischen Maschine erzeugt werden. Zumindest zeitweise können das Antriebsaggregat sowie die elektrische Maschine jedoch auch miteinander wirkverbunden sein, um das Antriebsdrehmoment gemeinsam bereitzustellen.

Die Hybridantriebseinrichtung weist eine Abtriebswelle auf, welche mit Rädern des Kraftfahrzeugs wirkverbunden ist, vorzugsweise starr und/oder permanent. Das Schaltgetriebe ist mit der Abtriebswelle wirkverbunden, vorzugsweise ebenfalls starr und/oder permanent. Alternativ kann jedoch zwischen dem Schaltgetriebe und der Abtriebswelle eine Kupplung, insbesondere eine Anfahrkupplung, vorgesehen sein. Alternativ liegt die Kupplung beziehungsweise die Anfahrkupplung in der Wirkverbindung zwischen dem Schaltgetriebe und der elektrischen Maschine vor. Eine weitere Kupplung, insbesondere eine Trennkupplung, kann zwischen dem Antriebsaggregat und der elektrischen Maschine angeordnet sein. Mittels dieser Kupplung ist das Antriebsaggregat mit der elektrischen Maschine koppelbar. Alternativ kann es vorgesehen sein, dass das Antriebsaggregat permanent mit der elektrischen Maschine wirkverbunden ist.

Während des Fahrbetriebs des Kraftfahrzeugs, insbesondere unter Zuhilfenahme des Antriebsaggregats, sind mithin sowohl das Antriebsaggregat als auch die elektrische Maschine über das Schaltgetriebe mit der Abtriebswelle der Hybridantriebseinrichtung wirkverbunden. Entsprechend kann mit Hilfe des Antriebsaggregats zumindest ein Teil des Antriebsdrehmoments bereitgestellt werden. Zusätzlich kann die elektrische Maschine ebenfalls einen Teil des Antriebsdrehmoments erzeugen.

Alternativ kann die elektrische Maschine generatorisch betrieben oder von dem Antriebsaggregat geschleppt werden.

Aus dem Stand der Technik sind beispielsweise die Druckschriften US 2011/0232980 A1 und JP 2005-263061 A bekannt. Diese beiden Dokumente zeigen ein Verfahren und eine Hybridantriebseinrichtung gemäß dem Oberbegriff der Ansprüche 1 und 8.

Es ist Aufgabe der Erfindung, ein Verfahren zum Betreiben einer Hybridantriebseinrichtung für ein Kraftfahrzeug vorzuschlagen, welches gegenüber bekannten Verfahren Vorteile aufweist, insbesondere ein besseres Temperaturmanagement der elektrischen Maschine bereitstellt.

Die wird erfindungsgemäß mit Hilfe des Verfahrens mit den Merkmalen des Anspruchs 1 erreicht. Dabei ist vorgesehen, dass die elektrische Maschine in einer Normalbetriebsart der Hybridantriebseinrichtung in einer Motorbetriebsart, einer Generatorbetriebsart und einer Leerlaufbetriebsart betrieben werden kann, und dass bei Überschreiten eines zweiten Temperaturgrenzwerts durch die Temperatur in eine Sicherheitsbetriebsart gewechselt wird, in welcher ein Betreiben der elektrischen Maschine nur in der Leerlaufbetriebsart zugelassen wird, wobei der zweite Temperaturgrenzwert niedriger ist als der erste Temperaturgrenzwert. Grundsätzlich ist vorgesehen, dass bei einem Überschreiten eines ersten Temperaturgrenzwerts durch eine Temperatur der elektrischen Maschine mittels des Schaltgetriebes die Übersetzung zwischen der elektrischen Maschine und der Abtriebswelle verkleinert wird. Es ist selbstverständlich, dass bei einem Betrieb der elektrischen Maschine zur Erzeugung eines Teils des Antriebsdrehmoments Wärme anfällt, welche die Temperatur der elektrischen Maschine erhöht. Ebenfalls fällt jedoch Wärme an, wenn die elektrische Maschine von dem Antriebsaggregat geschleppt wird und insoweit quasi drehmomentfrei betrieben wird.

Die Hybridantriebseinrichtung stellt dabei ein allein von dem Antriebsaggregat erzeugtes Drehmoment bereit. Dennoch wird die elektrische Maschine aufgrund ihrer Kopplung mit der Abtriebswelle beziehungsweise dem Antriebsaggregat mitgeschleppt. Aufgrund von Wirbelströme fällt auch in diesem Betriebszustand Wärme an, welche die Temperatur der elektrischen Maschine erhöht beziehungsweise erhöhen kann. Wird beispielsweise über längere Zeit das Antriebsdrehmoment allein mittels des Antriebsaggregats bei hoher Drehzahl erzeugt, so kann die Temperatur der elektrischen Maschine stark ansteigen.

Überschreitet nun diese Temperatur den ersten Temperaturgrenzwert, so soll ein weiteres Ansteigen der Temperatur nach Möglichkeit verhindert werden beziehungsweise der Wärmeeintrag in die elektrische Maschine reduziert werden. Zu diesem Zweck wird das Schaltgetriebe verwendet, um die Übersetzung zwischen der elektrischen Maschine und der Abtriebswelle zu verkleinern. Das bedeutet, dass bei gleichbleibender Drehzahl der Abtriebswelle die Drehzahl der elektrischen Maschine reduziert wird, sodass entsprechend auch die Wirbelströme und die von diesen erzeugte Wärme verringert werden. Besonders bevorzugt wird die Übersetzung derart gewählt, dass der Fahrbetrieb des Kraftfahrzeugs ohne Beeinträchtigung fortgesetzt werden kann. Insbesondere wird die verkleinerte Übersetzung derart gewählt, dass trotz der Verkleinerung das von der Hybridantriebseinrichtung beziehungsweise dem Antriebsaggregat bereitgestellte Antriebsdrehmoment einem Solldrehmoment entspricht, welches beispielsweise von einem Fahrer des Kraftfahrzeugs und/oder einer Fahrerassistenzeinrichtung angefordert wird.

In einer weiteren Ausgestaltung der Erfindung ist vorgesehen, dass das Schaltgetriebe ein Getriebesteuergerät aufweist, an dem bei Überschreiten des Temperaturgrenzwerts durch die Temperatur der elektrischen Maschine eine kleinere Maximaldrehzahl eingestellt wird. Die an dem Getriebesteuergerät eingestellte Maximaldrehzahl ist insoweit temperaturabhängig. So wird eine erste Maximaldrehzahl an dem Getriebesteuergerät eingestellt, wenn die Temperatur der elektrischen Maschine kleiner ist als der erste Temperaturgrenzwert oder diesem entspricht. Überschreitet jedoch die Temperatur den ersten Temperaturgrenzwert, so wird an dem Getriebesteuergerät eine zweite Maximaldrehzahl eingestellt, welche kleiner ist als die erste Maximaldrehzahl. Selbstverständlich kann es auch vorgesehen sein, dass die an dem Getriebesteuergerät eingestellte Maximaldrehzahl anhand der Temperatur der elektrischen Maschine ermittelt wird, insbesondere mittels einer mathematischen Beziehung, einem Kennfeld und/oder einer Tabelle.

Das Getriebesteuergerät ist derart ausgestaltet, dass es die Drehzahl der elektrischen Maschine beziehungsweise des Antriebsaggregats in Richtung höherer Drehzahlen auf die Maximaldrehzahl begrenzt. Überschreitet also die tatsächlich vorliegende Drehzahl der elektrischen Maschine die Maximaldrehzahl, so steuert das Getriebesteuergerät das Schaltgetriebe derart an, dass die Übersetzung zwischen der elektrischen Maschine und der Abtriebswelle verkleinert wird, sodass der vorstehend beschriebene Effekt erzielt wird.

In einer alternativen Ausführungsform der Erfindung kann es vorgesehen sein, dass das Getriebesteuergerät die Temperatur mit dem ersten Temperaturgrenzwert vergleicht und bei dem Überschreiten des ersten Temperaturgrenzwerts das Schaltgetriebe zum Verkleinern der Übersetzung ansteuert. Das Getriebesteuergerät weist als Eingangsgröße nun nicht mehr die Maximaldrehzahl auf. Vielmehr ermittelt das Getriebesteuergerät selbst die Temperatur der elektrischen Maschine und vergleicht sie mit dem ersten Temperaturgrenzwert. Der erste Temperaturgrenzwert kann dem Getriebesteuergerät ebenfalls als Eingangsgröße zur Verfügung gestellt werden oder aber fest in ihm hinterlegt sein. Stellt das Getriebesteuergerät fest, dass die Temperatur den ersten Temperaturgrenzwert überschreitet, so steuert es auf bekannte Art und Weise das Schaltgetriebe zum Verkleinern der Übersetzung an.

Es ist erfindungsgemäß vorgesehen, dass die elektrische Maschine in einer Normalbetriebsart der Hybridantriebseinrichtung in einer Motorbetriebsart, einer Generatorbetriebsart und einer Leerlaufbetriebsart betrieben werden kann, und dass bei Überschreiten eines zweiten Temperaturgrenzwerts durch die Temperatur in eine Sicherheitsbetriebsart gewechselt wird, in welcher ein Betreiben der elektrischen Maschine nur in der Leerlaufbetriebsart zugelassen wird. Entspricht also die Temperatur der elektrischen Maschine dem zweiten Temperaturgrenzwert oder ist kleiner als dieser, so liegt die Normalbetriebsart der Hybridantriebseinrichtung vor. Selbstverständlich kann aus der Sicherheitsbetriebsart wieder in die Normalbetriebsart gewechselt werden, sobald die Temperatur der elektrischen Maschine den zweiten Temperaturgrenzwert unterschreitet oder diesem entspricht.

In der Normalbetriebsart kann die elektrische Maschine in mehreren unterschiedlichen Betriebsarten betrieben werden. So kann sie beispielsweise in der Motorbetriebsart zum Bereitstellen wenigstens eines Teils des Antriebsdrehmoments verwendet werden. Umgekehrt kann sie in der Generatorbetriebsart als Generator zur Umwandlung von kinetischer Energie in elektrische Energie verwendet werden. In der Leerlaufbetriebsart ist die elektrische Maschine drehmomentfrei und wird von der Abtriebswelle und/oder dem Antriebsaggregat geschleppt. Überschreitet jedoch die Temperatur der elektrischen Maschine den zweiten Temperaturgrenzwert, so wird aus der Normalbetriebsart in die Sicherheitsbetriebsart gewechselt. In dieser darf die elektrische Maschine nur in der Leerlaufbetriebsart betrieben werden. In der Sicherheitsbetriebsart wird zwar aufgrund der vorstehenden beschriebenen Wirbelströme ebenfalls Wärme erzeugt, jedoch in deutlich geringerem Ausmaß als in der Motorbetriebsart und/oder der Generatorbetriebsart.

Erfindungsgemäß ist vorgesehen, dass der zweite Temperaturgrenzwert niedriger als der erste Temperaturgrenzwert ist. Wie bereits vorstehend erläutert, kann die Temperatur der elektrischen Maschine beziehungsweise die in dieser anfallenden Wärme auf unterschiedliche Art und Weise reduziert werden. Zum einen kann mittels des Schaltgetriebes die Übersetzung verkleinert werden, um die Drehzahl der elektrischen Maschine bei gleichbleibender Drehzahl der Abtriebswelle zu verringern. Des Weiteren kann aus der Normalbetriebsart in die Sicherheitsbetriebsart umgeschaltet werden.

Im Rahmen der Erfindung ist vorgesehen, dass ein abgestuftes Sicherheitskonzept realisiert ist. Zu diesem Zweck ist erfindungsgemäß der zweite Temperaturgrenzwert kleiner als der erste Temperaturgrenzwert. Es ist also vorgesehen, zuerst das Betreiben der elektrischen Maschine lediglich in der Leerlaufbetriebsart zuzulassen und erst nachfolgend, falls dies nicht ausreichend ist, die Übersetzung zwischen der elektrischen Maschine und der Abtriebswelle zu verkleinern.

In einer weiteren bevorzugten Ausgestaltung der Erfindung ist vorgesehen, dass als Temperatur der elektrischen Maschine eine Statortemperatur, eine Rotortemperatur und/oder eine Kühlmitteltemperatur verwendet wird. Grundsätzlich kann die Temperatur beliebig gewählt und bestimmt sein. Vorzugsweise gibt sie jedoch den tatsächlichen Zustand der elektrischen Maschine, insbesondere ohne Zeitverzug oder zumindest zeitnah wieder. Beispielsweise wird als Temperatur die Statortemperatur oder die Rotortemperatur herangezogen, wobei diese insbesondere unmittelbar an der elektrischen Maschine gemessen werden. Zusätzlich oder alternativ kann die Kühlmitteltemperatur herangezogen werden. Selbstverständlich kann als Temperatur auch ein Temperaturwert verwendet werden, welcher mehrere Temperaturen umfasst beziehungsweise aus diesen gebildet ist. Beispielsweise ist der Temperaturwert aus der Startortemperatur, der Rotortemperatur und/oder der Kühlmitteltemperatur beziehungsweise beliebigen Kombinationen aus diesen ermittelt.

In einer weiteren Ausgestaltung der Erfindung ist vorgesehen, dass eine bei dem Verkleinern eingestellte Übersetzung aus wenigstens einer Betriebsgröße und/oder einer Umgebungsgröße ermittelt wird. Während selbstverständlich die Übersetzung frei gewählt werden kann beziehungsweise fest hinterlegt sein kann, ist es vorteilhaft, sie aus der Betriebsgröße beziehungsweise der Umgebungsgröße zu bestimmen. Hierzu kann beispielsweise eine mathematische Beziehung, ein Kennfeld und/oder eine Tabelle herangezogen werden, wobei die Betriebsgröße und/oder die Umgebungsgröße als Eingangsgrößen und die Übersetzung als Ausgangsgröße vorliegen.

Beispielsweise kann es in einer weiteren Ausgestaltung der Erfindung vorgesehen sein, dass als Betriebsgröße die Temperatur, der erste Temperaturgrenzwert und/oder eine Temperaturdifferenz zwischen dem ersten Temperaturgrenzwert und der Temperatur verwendet wird. Insoweit geht die momentane Temperatur der elektrischen Maschine beziehungsweise der erste Temperaturgrenzwert unmittelbar in die einzustellende Übersetzung ein. Insbesondere wird die Übersetzung umso kleiner gewählt, je größer die Temperatur der elektrischen Maschine ist beziehungsweise je größer die Temperaturdifferenz zwischen dem ersten Temperaturgrenzwert und der Temperatur ist.

Schließlich kann in einer bevorzugten Ausgestaltung der Erfindung vorgesehen sein, dass als Umgebungsgröße eine Umgebungstemperatur verwendet wird. Die Temperatur der elektrischen Maschine hängt maßgeblich von der Umgebungstemperatur ab. Ist die Umgebungstemperatur gering, so wird die elektrische Maschine stärker gekühlt als bei einer hohen Umgebungstemperatur. Entsprechend ist es vorteilhaft, wenn die Übersetzung umso kleiner gewählt wird, je größer die Umgebungstemperatur ist.

Die Erfindung betrifft weiterhin eine Hybridantriebseinrichtung für ein Kraftfahrzeug, insbesondere zur Durchführung des Verfahrens nach einem oder mehreren der vorhergehenden Ansprüche, wobei die Hybridantriebseinrichtung über ein Antriebsaggregat sowie eine elektrische Maschine verfügt, die während eines Fahrbetriebs des Kraftfahrzeugs über ein Schaltgetriebe mit einer Abtriebswelle der Hybridantriebseinrichtung wirkverbunden sind, wobei die Hybridantriebseinrichtung dazu ausgebildet ist, bei einem Überschreiten eines ersten Temperaturgrenzwerts durch eine Temperatur der elektrischen Maschine mittels des Schaltgetriebes die Übersetzung zwischen der elektrischen Maschine und der Abtriebswelle zu verkleinern. Weiterhin ist vorgesehen, dass die elektrische Maschine in einer Normalbetriebsart der Hybridantriebseinrichtung in einer Motorbetriebsart, einer Generatorbetriebsart und einer Leerlaufbetriebsart betrieben werden kann, und dass bei Überschreiten eines zweiten Temperaturgrenzwerts durch die Temperatur in eine Sicherheitsbetriebsart gewechselt wird, in welcher ein Betreiben der elektrischen Maschine nur in der Leerlaufbetriebsart zugelassen wird, wobei der zweite Temperaturgrenzwert niedriger ist als der erste Temperaturgrenzwert.

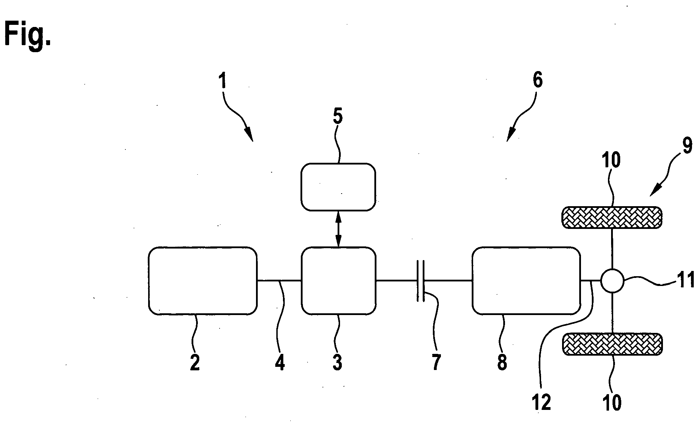

Auf die Vorteile einer derartigen Vorgehensweise beziehungsweise einer derartigen Ausgestaltung der Hybridantriebseinrichtung wurde bereits hingewiesen. Sowohl die Hybridantriebseinrichtung als auch das Verfahren können gemäß den vorstehenden Ausführungen weitergebildet sein, sodass insoweit auf diese verwiesen wird.
Die Erfindung wird nachfolgend anhand der in der Zeichnung dargestellten Ausführungsbeispiele näher erläutert, ohne dass eine Beschränkung der Erfindung erfolgt. Dabei zeigt die einzige

Figur eine schematische Darstellung einer Antriebseinrichtung.
Die Figur zeigt eine schematische Darstellung einer Antriebseinrichtung 1, beispielsweise für ein Kraftfahrzeug, welche in der hier dargestellten Ausführungsform als Hybridantriebseinrichtung vorliegt. Entsprechend weist die Antriebseinrichtung 1 mindestens zwei Antriebsaggregate, nämlich ein erstes Antriebsaggregat 2 und zweites Antriebsaggregat 3, auf. Das erste Antriebsaggregat 2 kann beispielsweise in Form einer Brennkraftmaschine vorliegen, und das zweite Antriebsaggregat 3 ist eine elektrische Maschine.

Die beiden Antriebsaggregate 2 und 3 können über eine Welle 4 starr und/oder permanent miteinander wirkverbunden sein. Der Welle 4 kann jedoch auch eine Trennkupplung zugeordnet sein, mittels welcher die Wirkverbindung zwischen den Antriebsaggregaten 2 und 3 unterbrechbar ist. Das zweite Antriebsaggregat 3 beziehungsweise die elektrische Maschine wird mittels einer Leistungselektronik 5 angesteuert, welche beispielsweise ihrerseits mit Hilfe eines Steuergeräts angesteuert wird.

Die Antriebseinrichtung 1 stellt einen Bestandteil eines Antriebsstrangs 6 eines Kraftfahrzeugs dar. Sie umfasst neben den Antriebsaggregaten 2 und 3 vorzugsweise eine Anfahrkupplung 7 sowie ein Schaltgetriebe 8. Das Schaltgetriebe 8 ist über die Anfahrkupplung 7 mit der Antriebseinrichtung 1 wirkverbunden oder zumindest wirkverbindbar. Der Antriebsstrang 6 weist eine Achse 9 auf, welcher in dem hier dargestellten Ausführungsbeispiel zwei Räder 10 zugeordnet sind. Die Achse 9 beziehungsweise die Räder 10 sind bevorzugt über ein Achsdifferenzialgetriebe 11 mit dem Schaltgetriebe 8 wirkverbunden, insbesondere starr und/oder permanent. Entsprechend sind die Achse 9 beziehungsweise die Räder 10 mittels der Antriebseinrichtung 1 antreibbar. Dabei liegt eine Ausgangswelle des Schaltgetriebes 8 als Abtriebswelle 12 der Antriebseinrichtung 1 vor. Über die Abtriebswelle 12 liegt eine Wirkverbindung zwischen dem Schaltgetriebe 8 und der Achse 9, insbesondere dem Achsdifferenzialgetriebe 11 vor, vorzugsweise starr und/oder permanent.

Es ist nun vorgesehen, dass während eines Fahrbetriebs des Kraftfahrzeugs beide Antriebsaggregate 2 und 3 über das Schaltgetriebe 8 mit der Abtriebswelle 12 wirkverbunden sind. Beispielsweise wird das Antriebsaggregat 3 lediglich in einer Leerlaufbetriebsart betrieben, welche es von dem Antriebsaggregat 2 geschleppt wird. Aufgrund von Wirbelströmen entsteht in dem Antriebsaggregat 3 jedoch Wärme, welche zu einer Temperaturerhöhung führt. Dies tritt insbesondere bei hohen Drehzahlen des Antriebsaggregats 3 auf. Überschreitet nun eine Temperatur der elektrischen Maschine 3 einen ersten Temperaturgrenzwert, so soll mittels des Schaltgetriebes 8 die zwischen dem Antriebsaggregat 3 und der Abtriebswelle 12 vorliegende Übersetzung verkleinert werden, sodass bei gleichbleibender Drehzahl der Abtriebswelle 12 die Drehzahl des Antriebsaggregats 3 verringert wird. Mit einer derartigen Vorgehensweise kann die in dem Antriebsaggregat 3 anfallende Wärmemenge und mithin die Temperatur des Antriebsaggregats 3 verringert werden.

Weiterhin ist vorgesehen, dass bei Überschreiten eines zweiten Temperaturgrenzwerts durch die Temperatur in eine Sicherheitsbetriebsart gewechselt wird, in welcher ein Betreiben der elektrischen Maschine (3) nur in der Leerlaufbetriebsart zugelassen wird, wobei gemäß der Erfindung der zweite Temperaturgrenzwert niedriger ist als der erste Temperaturgrenzwert.

## Patentansprüche

1. Verfahren zum Betreiben einer Hybridantriebseinrichtung (1) für ein Kraftfahrzeug, wobei die Hybridantriebseinrichtung (1) über ein Antriebsaggregat (2) sowie eine elektrische Maschine (3) verfügt, die während eines Fahrbetriebs des Kraftfahrzeugs über ein Schaltgetriebe (8) mit einer Abtriebswelle (12) der Hybridantriebseinrichtung (1) wirkverbunden sind, wobei bei einem Überschreiten eines ersten Temperaturgrenzwerts durch eine Temperatur der elektrischen Maschine (3) mittels des Schaltgetriebes (8) die Übersetzung zwischen der elektrischen Maschine (3) und der Abtriebswelle (12) verkleinert wird, wobei die elektrische Maschine (3) in einer Normalbetriebsart der Hybridantriebseinrichtung (1) in einer Motorbetriebsart, einer Generatorbetriebsart und einer Leerlaufbetriebsart betrieben werden kann, und wobei bei Überschreiten eines zweiten Temperaturgrenzwerts durch die Temperatur in eine Sicherheitsbetriebsart gewechselt wird, in welcher ein Betreiben der elektrischen Maschine (3) nur in der Leerlaufbetriebsart zugelassen wird, **dadurch gekennzeichnet, dass** der zweite Temperaturgrenzwert niedriger ist als der erste Temperaturgrenzwert.

2. Verfahren nach Anspruch 1, **dadurch gekennzeichnet, dass** das Schaltgetriebe (8) ein Getriebesteuergerät aufweist, an dem bei Überschreiten des Temperaturgrenzwerts durch die Temperatur der elektrischen Maschine (3) eine kleinere Maximaldrehzahl eingestellt wird.

3. Verfahren nach Anspruch 2, **dadurch gekennzeichnet, dass** das Getriebesteuergerät die Temperatur mit dem ersten Temperaturgrenzwert vergleicht und bei dem Überschreiten des ersten Temperaturgrenzwerts das Schaltgetriebe (8) zum Verkleinern der Übersetzung ansteuert.

4. Verfahren nach einem der vorhergehenden Ansprüche, **dadurch gekennzeichnet, dass** als Temperatur der elektrischen Maschine (3) eine Statortemperatur, eine Rotortemperatur und/oder eine Kühlmitteltemperatur verwendet wird.

5. Verfahren nach einem der vorhergehenden Ansprüche, **dadurch gekennzeichnet, dass** eine bei dem Verkleinern eingestellte Übersetzung aus wenigstens einer Betriebsgröße und/oder einer Umgebungsgröße ermittelt wird.

6. Verfahren nach einem der vorhergehenden Ansprüche, **dadurch gekennzeichnet, dass** als Betriebsgröße die Temperatur, der erste Temperaturgrenzwert und/oder eine Temperaturdifferenz zwischen dem ersten Temperaturgrenzwert und der Temperatur verwendet wird.

7. Verfahren nach Anspruch 5, **dadurch gekennzeichnet, dass** als Umgebungsgröße eine Umgebungstemperatur verwendet wird.

8. Hybridantriebseinrichtung (1) für ein Kraftfahrzeug zur Durchführung des Verfahrens nach einem oder mehreren der vorhergehenden Ansprüche, wobei die Hybridantriebseinrichtung (1) über ein Antriebsaggregat (2) sowie eine elektrische Maschine (3) verfügt, die während eines Fahrbetriebs des Kraftfahrzeugs über ein Schaltgetriebe (8) mit einer Abtriebswelle (12) der Hybridantriebseinrichtung (1) wirkverbunden sind, wobei die Hybridantriebseinrichtung (1) dazu ausgebildet ist, bei einem Überschreiten eines ersten Temperaturgrenzwerts durch eine Temperatur der elektrischen Maschine (3) mittels des Schaltgetriebes (8) die Übersetzung zwischen der elektrischen Maschine und der Abtriebswelle (12) zu verkleinern, wobei die elektrische Maschine (3) in einer Normalbetriebsart der Hybridantriebseinrichtung (1) in einer Motorbetriebsart, einer Generatorbetriebsart und einer Leerlaufbetriebsart betrieben werden kann, und wobei bei Überschreiten eines zweiten Temperaturgrenzwerts durch die Temperatur in eine Sicherheitsbetriebsart gewechselt wird, in welcher ein Betreiben der elektrischen Maschine (3) nur in der Leerlaufbetriebsart zugelassen wird, **dadurch gekennzeichnet, dass** der zweite Temperaturgrenzwert niedriger ist als der erste Temperaturgrenzwert.

## Claims

1. Method for operating a hybrid drive device (1) for a motor vehicle, wherein the hybrid drive device (1) has a drive unit (2) and an electric machine (3), which during a drive operation of the motor vehicle are operationally connected via a transmission (8) with an output shaft (12) of the hybrid drive device (1), wherein when a first temperature threshold value is exceeded by a temperature of the electric machine (3) the transmission (8) ratio between the electric machine (3) and the output shaft (12) is decreased, wherein the electric machine (3) can be operated in a normal operating mode of the hybrid drive device (1) in a motor operating mode, a generator operating mode and an idle operating mode, and wherein when a second temperature threshold value is exceeded by the temperature, a change is made to a safety operating mode, in which an operation of the electric machine (3) is permitted only in the idle operating mode, **characterised in that** the second temperature threshold value is lower than the first temperature threshold value.

2. Method according to claim 1, **characterised in that** the transmission (8) has a transmission control device, at which a smaller maximum rotational speed is set when the temperature threshold value is exceeded by the temperature of the electric machine (3).

3. Method according to claim 2, **characterised in that** the transmission control device compares the temperature with the first temperature threshold value and, when the first temperature threshold value is exceeded, controls the transmission (8) for reducing the transmission ratio.

4. Method according to any of the preceding claims, **characterised in that** as temperature of the electric machine (3) is used a stator temperature, a rotor temperature and/or a cooling means temperature.

5. Method according to any of the preceding claims, **characterised in that** a transmission ratio set at the reduction is determined from at least one operational parameter and/or one environmental parameter.

6. Method according to any of the preceding claims, **characterised in that** as operational parameter is used the temperature, the first temperature threshold value and/or a temperature difference between the first temperature threshold value and the temperature.

7. Method according to claim 5, **characterised in that** as environmental parameter is used an environmental temperature.

8. Hybrid drive device (1) for a motor vehicle for carrying out the method according to one or more of the preceding claims, wherein the hybrid drive device (1) has a drive unit (2) and an electric machine (3) which during a drive operation of the motor vehicle are operationally connected via a transmission (8) with an output shaft (12) of the hybrid drive device (1), wherein the hybrid drive device (1) is configured, when a first temperature threshold value is exceeded by a temperature of the electric machine (3) to decrease by means of the transmission (8) the transmission ratio between the electric machine and the output shaft (12), wherein the electric machine (3) can be operated in a normal operating mode of the hybrid drive device (1) in a motor operating mode, a generator operating mode and an idle operating mode, and wherein when a second temperature threshold value is exceeded by the temperature, a change is made to a safety operating mode, in which an operation of the electric machine (3) is permitted only in the idle operating mode, **characterised in that** the second temperature threshold value is lower than the first temperature threshold value.

## Revendications

1. Procédé de fonctionnement d'un dispositif d'entraînement hybride (1) pour un véhicule automobile, dans lequel le dispositif d'entraînement hybride (1) dispose d'un groupe d'entraînement (2) ainsi que d'une machine électrique (3) qui sont raccordés activement pendant un mode de conduite du véhicule automobile par le biais d'un engrenage de commutation (8) à un arbre de sortie (12) du dispositif d'entraînement hybride (1), dans lequel lors d'un dépassement d'une première valeur limite de température par une température de la machine électrique (3) au moyen de l'engrenage de commutation (8) la transmission entre la machine électrique (3) et l'arbre de sortie (12) est réduite, dans lequel
la machine électrique (3) peut être actionnée dans un mode de fonctionnement normal du dispositif d'entraînement hybride (1) dans un mode de fonctionnement de moteur, un mode de fonctionnement de générateur et un mode de fonctionnement de marche à vide, et dans lequel
lors d'un dépassement d'une seconde valeur limite de température par la température succède un mode de fonctionnement de sécurité, dans lequel un fonctionnement de la machine électrique (3) est seulement autorisé dans le mode de fonctionnement de marche à vide, **caractérisé en ce que** la seconde valeur limite de température est plus faible que la première valeur limite de température.

2. Procédé selon la revendication 1, **caractérisé en ce que** l'engrenage de commutation (8) présente un appareil de commande d'engrenage au niveau duquel lors d'un dépassement de la valeur limite de température par la température de la machine électrique (3) une vitesse de rotation maximale inférieure est réglée.

3. Procédé selon la revendication 2, **caractérisé en ce que** l'appareil de commande d'engrenage compare la température avec la première valeur limite de température et commande lors du dépassement de la première valeur limite de température l'engrenage de commutation (8) pour la réduction de la transmission.

4. Procédé selon l'une quelconque des revendications précédentes, **caractérisé en ce qu'**une température de stator, une température de rotor et/ou une température de moyen de refroidissement est utilisée comme température de la machine électrique (3).

5. Procédé selon l'une quelconque des revendications précédentes, **caractérisé en ce qu'**une transmission réglée lors de la réduction est déterminée à partir d'au moins une grandeur de fonctionnement et/ou une grandeur d'environnement.

6. Procédé selon l'une quelconque des revendications précédentes, **caractérisé en ce que** la température, la première valeur limite de température et/ou une différence de température entre la première valeur limite de température et la température est utilisée comme grandeur de fonctionnement.

7. Procédé selon la revendication 5, **caractérisé en ce qu'**une température d'environnement est utilisée comme grandeur d'environnement.

8. Dispositif d'entraînement hybride (1) pour un véhicule automobile pour la réalisation du procédé selon l'une ou plusieurs quelconques des revendications précédentes, dans lequel le dispositif d'entraînement hybride (1) dispose d'un groupe d'entraînement (2) ainsi que d'une machine électrique (3) qui sont raccordés activement pendant un mode de conduite du véhicule automobile par le biais d'un engrenage de commutation (8) à un arbre de sortie (12) du dispositif d'entraînement hybride (1), dans lequel
le dispositif d'entraînement hybride (1) est réalisé afin de réduire lors d'un dépassement d'une première valeur limite de température par une température de la machine électrique (3) au moyen de l'engrenage de commutation (8) la transmission entre la machine électrique et l'arbre de sortie (12), dans lequel la machine électrique (3) peut être actionnée dans un mode de fonctionnement normal du dispositif d'entraînement hybride (1) dans un mode de fonctionnement de moteur, un mode de fonctionnement de générateur et un mode de fonctionnement de marche à vide, et dans lequel
lors d'un dépassement d'une seconde valeur limite de température par la température succède un mode de fonctionnement de sécurité, dans lequel un fonctionnement de la machine électrique (3) est seulement autorisé dans le mode de fonctionnement de marche à vide, **caractérisé en ce que** la seconde valeur limite de température est inférieure à la première valeur limite de température.
